# EUROPÄISCHE PATENTSCHRIFT

(11) **EP 0 983 488 B1**
(45) Veröffentlichungstag und Bekanntmachung des Hinweises auf die Patenterteilung: **04.06.2003**
(21) Anmeldenummer: 99939216.0
(22) Anmeldetag: 09.03.1999
(51) Int. Cl.: G01F 1/28, G01F 15/00

(54) **VORRICHTUNG ZUR HERSTELLUNG VON ROHRABZWEIGUNGEN**
DEVICE FOR PRODUCING PIPING BRANCH CONNECTIONS
DISPOSITIF POUR LA REALISATION D'EMBRANCHEMENTS DE TUYAU

(30) Priorität: 09.03.1998 DE 29804151 U
(43) Veröffentlichungstag der Anmeldung: 08.03.2000
(73) Patentinhaber: Reich KG, Regel- und Sicherheitstechnik, 35713 Eschenburg-Wissenbach (DE)
(72) Erfinder: BENDER, Helmuth, D-35713 Eschenburg (DE)
(74) Vertreter: Hofstetter, Alfons J., Dr.rer.nat.
(86) Internationale Anmeldenummer: EP9901518
(87) Internationale Veröffentlichungsnummer: WO99046566

(56) Entgegenhaltungen:
- EP-A- 0 708 312
- EP-A- 0 797 080
- DE-A- 3 509 718
- DE-C- 4 445 005
- GB-A- 2 073 893
- SMIGIELSKI J: "KLAPPEN-DURCHFLUSSUMFORMER MIT HALLGENERATOR-GEBER" TECHNISCHES MESSEN TM, Bd. 57, Nr. 7 / 08, 1. Juli 1990, Seiten 281-283, XP000138505

## Beschreibung

Die vorliegende Erfindung betrifft eine Vorrichtung zum Herstellen von einer oder mehreren Abzweigungen an einem mediumsführenden Rohr.

In dem Aufsatz von J. Smigielski "Klappen-Durchflußumformer mit Hallgenerator-Geber", veröffentlicht in TM Technisches Messen, 57, Nr. 7/8, 1. Juli 1990, Seiten 281 - 283, XP 000138505, wird als Beispiel für eine Meßvorrichtung zur Messung von Durchflußmenge und Temperatur eines fließfähigen Mediums ein Wännezähler beschrieben, in den als Hauptbestandteil ein Klappendurchflußmesser mit Hallgenerator-Umformer eingesetzt ist. Der Thermoelement-Temperaturdifferenzfühler dient gleichzeitig als einzige Speisequelle. Die Ablesung erfolgt über einen Quecksilber-Elektrolyt-Integrator.

In diesem Zusammenhang wird auf die DE 44 45 005 verwiesen, aus der eine Vorrichtung zum Herstellen von einer oder mehreren Abzweigungen an einem mediumsführenden Rohr bekannt ist, die aus einer zweiteiligen auf das Rohr aufklemmbaren Einheit mit einem Unterteil und einem Oberteil besteht. Für jede Abzweigung sind dabei quer zur Rohrachse zwei sich gegenüberliegende Öffnungen im Rohr ausgebildet, wobei das Unterteil eine zu der unteren Öffnung dichtend passende Durchgangspassage für das fließfähige Medium und das Oberteil einen in die obere Öffnung passenden Ventileinsatz für die untere Öffnung aufweist und beide Teile fest auf das Rohr aufgeklemmt werden.

Aus der DE 35 09 718 ist eine ähnliche Vorrichtung bekannt, bei der überdies im Oberteil ein Durchflußmesser für das fließfähige Medium angeordnet ist.

Derartige Vorrichtungen zur Herstellung von Rohrabzweigungen werden vielfach verwendet. In vielen Bereichen der Technik stellt sich die Aufgabe, aus einem mediumsführenden Hauptrohr Abzweigungen herzustellen. Zur Mengenregulierung des Mediums ist dabei an der Abzweigung ein Ventil angeordnet Insbesondere finden derartige Vorrichtungen Verwendungen bei Heizkreisverteilem in Zentralheizungen. Neben Wasser als fließfähigem Medium in Zentralheizungen ist es aber auch denkbar, andere fließfähige Medien, wie Öl oder Schmiermittel, in den Abzweigungen zu führen. Derartiges kann z.B. in der chemischen Verfahrenstechnik erforderlich werden. Der Anwendungsbereich ist beliebig. Es kann sich auch um gasförmige Medien handeln.

Nachteilig an diesen bekannten Vorrichtungen zur Herstellung von Rohrabzweigungen ist jedoch, daß es nicht möglich ist, Parameter, wie Durchflußmenge oder Temperatur, des Mediums darzustellen. Insbesondere in Heizkreissystemen oder bei chemischen Verfahrensprozessen ist es aber unumgänglich, derartige Werte messen und darstellen zu können.

Die Aufgabe der vorliegenden Erfindung besteht darin, eine Vorrichtung zum Herstellen von einer oder mehreren Abzweigungen an einem mediumsführenden Rohr bereitzustellen, die eine gleichzeitige Messung und Kontrolle der Durchflußmenge und der Temperatur des im System fließenden Mediums erlaubt.

Diese Aufgabe wird gelöst durch eine Vorrichtung mit den Merkmalen von Patentanspruch 1.

Vorteilhafte Ausgestaltungen sind in den Unteransprüchen beschrieben.

Eine erfindungsgemäße Vorrichtung zur Herstellung von Rohrabzweigungen weist einen im Oberteil einer aufklemmbaren Einheit angeordneten Durchflußmesser für das fließfähige Medium sowie eine Temperaturmeßvorrichtung auf. Dadurch ist gewährleistet, daß bei gattungsgemäßen Vorrichtungen es nunmehr möglich ist, die Durchflußmenge und die Temperatur des im System fließenden Mediums zu bestimmen. Neben der Bestimmung derartiger Parameter ist auch eine entsprechende Regulierung der Durchflußmenge des fließfähigen Mediums möglich.

In einer vorteilhaften Ausgestaltung der Erfindung ist am Oberteil eine Anzeigevorrichtung zur Anzeige der gemessenen Durchflußmenge und der Temperaturwerte angeordnet Dadurch ist eine "vor Ort-Ablesung" der ermittelten Werte möglich. Des weiteren ist es möglich, an jeder Abzweigung des mediumsführenden Rohrs je einen Durchflußmesser und eine Temperaturmeßvorrichtung mit einer entsprechenden Anzeigevorrichtung auszubilden. So können vorteilhafterweise auftretende Unterschiede bei den Durchflußmengen oder den auftretenden Temperaturen sofort erkannt werden.

Bei der erfindungsgemäßen Vorrichtung zur Herstellung von einer oder mehreren Rohrabzweigungen besteht das Oberteil aus einem äußeren Rohrmantel und einem innerhalb des Rohrmantels angeordneten Innenrohr. Dabei ist an dem dem Unterteil zugewandten Ende des Innenrohrs ein Ventilteller angeordnet, der zum Eingriff in die korrespondierende untere Öffnung des Rohrs ausgebildet ist, so daß das aus der Durchgangspassage kommende Medium im Innenrohr geführt wird. Zudem ist der Durchmesser des Innenrohrs derart bemessen, daß zwischen der Oberfläche des Innenrohrs und der Innenfläche des Rohrmantels ein Hohlraum entsteht, durch den das fließfähige Medium aus dem Oberteil in das Rohr geleitet wird. Dadurch ist gewährleistet, daß das aus der Abzweigung bzw. der Durchgangspassage strömende Medium durch das Oberteil der aufklemmbaren Einheit fließen muß. Der Durchflußmesser ist vorteilhafterweise innerhalb des Innenrohrs und die Temperaturmeßvorrichtung im Hohlraum angeordnet. Somit ist eine exakte Messung der Durchflußmenge des Mediums sowie dessen Temperatur möglich. Die Anordnung des Durchflußmessers und der Temperaturmeßvorrichtung erlaubt es zudem, die gesamte Vorrichtung relativ klein halten zu können.

Weitere Einzelheiten, Merkmale und Vorteile der Erfindung ergeben sich aus der folgenden Beschreibung eines zeichnerisch dargestellten Ausführungsbeispieles.

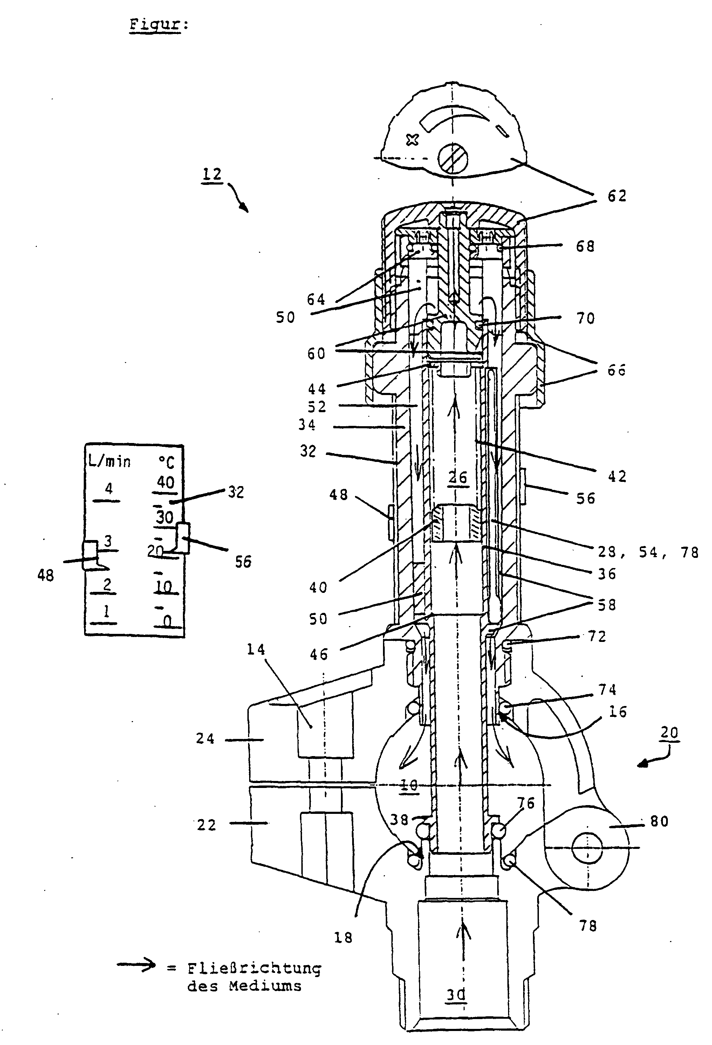

Die in der Figur in einer schematischen Schnittdarstellung gezeigte Vorrichtung 12 zur Herstellung von Rohrabzweigungen umfaßt eine auf ein Rohr 10 aufklemmbare, zweiteilige Einheit 20 mit einem Unterteil 22 und einem Oberteil 24. Für jede Abzweigung sind quer zur Rohrachse sich zwei gegenüberliegende Öffnungen 16, 18 im Rohr 10 ausgebildet. Das Unterteil 22 weist eine zu der unteren Öffnung 18 dichtend passende Durchgangspassage 30 für das βießfähige Medium auf. Das Oberteil 24 weist dagegen einen in die obere Öffnung 16 passenden Ventileinsatz auf. Die Teile 22, 24 sind über ein Klappgelenk 80 miteinander verbunden und fest auf das Rohr 10 aufgeklemmt. An dem dem Klappgelenk 80 gegenüberliegenden Ende der Einheit 20 ist eine Befestigungsvorrichtung 14 zum lösbaren Verbinden des Unter- und Oberteils 22, 24 ausgebildet.

Man erkennt, daß im Oberteil 24 ein Durchflußmesser 26 für das fließfähige Medium und eine Temperaturmeßvorrichtung 28 angeordnet ist. Des weiteren erkennt man, daß am Oberteil 24 eine Anzeigevorrichtung 32 zur Anzeige der gemessenen Durchflußmenge und der Temperaturwerte ausgebildet ist. Das Oberteil 24 besteht dabei aus einem äußeren Rohrmantel 34 und einem innerhalb des Rohrmantels 34 angeordneten Innenrohr 36. Der Durchmesser des Innenrohrs 36 ist dabei derart bemessen, daß zwischen der Oberfläche des Innenrohrs 36 und der Innenfläche des Rohrmantels 34 ein Hohlraum 52 entsteht, durch den das fließfähige Medium aus dem Oberteil 24 in das Rohr 10 geleitet wird. An dem dem Unterteil 22 zugewandten Ende des Innenrohrs 36 ist ein Ventilteller 38 ausgebildet, der zum Eingriff in die korrespondierende untere Öffnung 18 des Rohrs 10 dient. Damit wird das aus der Durchgangspassage 30 kommende Medium im Innenrohr 36 geführt.

Der Durchflußmesser 26 ist innerhalb des Innenrohrs 36 und die Temperaturmeßvorrichtung 28 im Hohlraum 52 angeordnet. Der Durchflußmesser 26 besteht dabei aus einem in dem Innenrohr 36 beweglich angeordneten Schwebekörper 40, an dem eine Druckfeder 42 anliegt, wobei die Druckfeder 42 an dem dem Schwebekörper 40 gegenüberliegenden Ende an einem Federanschlag 44 innerhalb des Innenrohrs 36 anliegt. Dabei übt die Druckfeder 42 eine entgegen der Strömungsrichtung des Mediums wirkende Federkraft aus. Weiterhin erkennt man, daß der Schwebekörper 40 mit einem Zeiger 48 der Anzeigevorrichtung 32 verbunden ist, so daß auf dieser die aktuelle Durchflußmenge abgelesen werden kann.

Die Temperaturmeßvorrichtung 28 besteht aus einem Thermometer 78 mit einer Thermometerröhre 54 und entsprechenden Aufnahme- und Fixiereinrichtungen 58 zur Befestigung des Thermometers 78 im Hohlraum 52. Die Anzeigevorrichtung 32 weist zudem einen Erinnerungszeiger 56 zur Markierung des von der Temperaturmeßvorrichtung 28 ermittelten Temperaturwertes auf.

Weiterhin erkennt man, daß an dem dem Rohr 10 abgewandten Ende des Oberteils 24 ein Drehgriff 62 ausgebildet ist. Mittels des Drehgriffs 62 wird eine Spindel 60 betätigt, die in das Innenrohr 36 eingreift und über einen Dichtring 70 damit dichtend verbunden ist. Bei Betätigung des Drehgriffs 62 hebt und senkt sich somit der Ventilteller 38. Eine den Drehgriff 62 teilweise überlappende Sicherungskappe 66 verhindert eine unbeabsichtigte Beschädigung des Drehgriffs 62 bzw. des gesamten Ventileinsatzes im Oberteil 24.

Des weiteren erkennt man, daß eine Vielzahl von Dichtungen 68, 70, 72, 74, 76 die dichtende Verbindung der Einzelelemente der Vorrichtung 12 gewährleistet. Weiterhin erkennt man, daß im Hohlraum 52 mehrere Distanzhalter 50 zur Sicherung des Abstandes zwischen der Oberfläche des Innenrohrs 36 und der Innenfläche des Rohrmantels 34 angeordnet sind.

Die Vorrichtung 12 zur Herstellung von Rohrabzweigungen besteht üblicherweise aus Metall oder einer Metallegierung. Allerdings ist es auch möglich, alle anderen Arten von geeigneten Materialien, wie z.B. Kunststoff, Glas oder ähnliches, zur Herstellung der einzelnen Elemente der Vorrichtung 12 zu verwenden.

## Patentansprüche

1. Vorrichtung zum Herstellen von einer oder mehreren Abzweigungen an einem mediumsführenden Rohr (10), bestehend aus einer zweiteiligen, auf das Rohr (10) aufklemmbaren Einheit (20) mit einem Unterteil (22) und einem Oberteil (24), wobei für jede Abzweigung quer zur Rohrachse zwei gegenüberliegende Öffnungen (16, 18) im Rohr (10) ausgebildet sind und das Unterteil (22) eine zu der unteren Öffnung (18) dichtend passende Durchgangspassage (30) für das fließfähige Medium aufweist und das Oberteil (24) aus einem äußeren Rohrmantel (34) und einem innerhalb des Rohrmantels (34) angeordneten Innenrohr (36) besteht, wobei an dem dem Unterteil (22) zugewandten Ende des Innenrohrs (36) ein Ventilteller (38) angeordnet ist, der zum Eingriff in die korrespondierende untere Öffnung (18) des Rohrs (10) ausgebildet ist, so daß das aus der Durchgangspassage (30) kommende Medium im Innenrohr (36) geführt wird und der Durchmesser des Innenrohrs (36) derart bemessen ist, daß zwischen der Oberfläche des Innenrohrs (36) und der Innenfläche des Rohrmantels (34) ein Hohlraum (52) entsteht, durch den das fließfahige Medium aus dem Oberteil (24) in das Rohr (10) geleitet wird, und wobei ein Durchflußmesser (26) und eine Temperaturmeßvorrichtung (28) in bzw. entlang des in der Vorrichtung ausgebildeten Strömungspfads für das fließfähige Medium angeordnet sind.

2. Vorrichtung nach Anspruch 1,
**dadurch gekennzeichnet,**
**daß** der Durchflußmesser (26) innerhalb des Innenrohrs (36) und die Temperaturmeßvorrichtung (28) im Hohlraum (52) angeordnet ist

3. Vorrichtung nach Anspruch 1 oder 2,
**dadurch gekennzeichnet,**
**daß** der Durchβußmesser (26) einen in dem Innenrohr (36) beweglich angeordneten Schwebekörper (40) umfaßt.

4. Vorrichtung nach Anspruch 3,
**dadurch gekennzeichnet,**
**daß** an dem Schwebekörper (40) eine Druckfeder (42) anliegt, die eine Federkraft entgegen der Strömungsrichtung des Mediums ausübt.

5. Vorrichtung nach Anspruch 3 oder 4,
**dadurch gekennzeichnet,**
**daß** der Schwebekörper (40) mit einem Zeiger (48) einer Anzeigevorrichtung (32) zur Anzeige der gemessenen Durchflußmenge verbunden ist.

6. Vorrichtung nach einem der vorhergehenden Ansprüche,
**dadurch gekennzeichnet,**
**daß** die Temperaturmeßvorrichtung (28) ein Thermometer (78) mit einer Thermometerröhre (54) und entsprechenden Aufnahme- und Fixiereinrichtungen (58) zur Befestigung des Thermometers (78) im Hohlraum (52) umfaßt.

7. Vorrichtung nach Anspruch 6,
**dadurch gekennzeichnet,**
**daß** die Anzeigevorrichtung (32) einen Erinnerungszeiger (56) zur Markierung des von der Temperaturmeßvorrichtung (28) ermittelten Temperaturwertes aufweist.

8. Vorrichtung nach einem der vorhergehenden Ansprüche,
**dadurch gekennzeichnet,**
**daß** an dem dem Rohr (10) abgewandten Ende des Oberteils (24) ein Drehgriff (62) ausgebildet ist, der eine Spindel (60) betätigt, die wiederum in das Innenrohr (36) eingreift und mit diesem dichtend verbunden ist, so daß sich bei Betätigung des Drehgriffs (62) der Ventilteller (38) hebt und senkt.

## Claims

1. Apparatus for producing one or more branches at a medium-carrying pipe (10) consisting of a two-part unit (20) clampable to the pipe (10), having a bottom portion (22) and a top portion (24), wherein for each branch transverse to the pipe axis, two opposed openings (16, 18) are formed in the pipe (10), and the bottom portion (22) has a passageway (30) for the flowable medium sealingly fitting to the lower opening (18), and the top portion (24) consists of an outer pipe jacket (34) and an inner pipe (36) disposed inside the pipe jacket (34), wherein a valve disk (38) is disposed at ,the end of the inner pipe (36) facing the bottom portion (22), which is formed for engaging the corresponding lower opening (18) of the pipe (10), such that the medium coming from the passageway (30) is guided in the inner pipe (36), and the diameter of the inner pipe (36) is dimensioned such that a cavity (52) results between the surface of the inner pipe (36) and the inner surface of the pipe jacket (34), through which the flowable medium is guided from the top portion (24) into the pipe (10), and wherein a flowmeter (26) and a temperature measuring device (28) are disposed in or along the flow path for the flowable medium formed in the apparatus, respectively.

2. Apparatus according to claim 1,
**characterized in**
**that** the flowmeter (26) is disposed inside the inner pipe (36), and the temperature measuring device (28) is disposed in the cavity (52).

3. Apparatus according to claim 1 or 2,
**characterized in**
**that** the flowmeter (26) comprises a float (40) movably disposed in the inner pipe (36).

4. Apparatus according to claim 3,
**characterized in**
**that** a compression spring (42) abuts the float (40), which is exerting a spring force opposite to the flow direction of the medium.

5. Apparatus according to claim 3 or 4,
**characterized in**
**that** the float (40) is connected to a pointer (48) of an indicating device (32) for indicating the measured flowrate.

6. Apparatus according to any one of the preceding claims,
**characterized In**
**that** the temperature measuring device (28) comprises a thermometer (78) having a thermometer tube (54) and corresponding receiving and fixing means (58) for fixing the thermometer (78) in the cavity (52).

7. Apparatus according to claim 6,
**characterized in**
**that** the indicating device (32) has a reminding pointer (56) for marking the temperature value detected by the temperature measuring device (28).

8. Apparatus according to any one of the preceding claims,
**characterized in**
**that** at the end of the top portion (24), facing away from the pipe (10), a rotary grip (62) is formed, which actuates a spindle (60) that in turn engages the inner pipe (36) and is sealingly connected to the same, such that upon actuation of the rotary grip (62) the valve disk (38) rises and lowers.

## Revendications

1. Dispositif pour créer une ou plusieurs dérivations à un tube (10) conduisant un fluide, constitué d'une unité (20) en deux pièces pouvant se coincer sur le tube (10) comportant une pièce inférieure (22) et une pièce supérieure (24), pour chaque dérivation, en travers de l'axe du tube, deux ouvertures (16, 18) situées face à face étant formées dans le tube (10), et la pièce inférieure (22) présentant un passage de traversée (30) pour le fluide apte à couler, quel passage s'adapte de manière étanche à l'ouverture inférieure (18), et la pièce supérieure (24) se constituant d'une enveloppe (34) extérieure de tube et d'un tube intérieur (36) disposé à l'intérieur de l'enveloppe (34) de tube, une tête de soupape (38) étant disposée à l'extrémité du tube intérieur (36) dirigée vers la pièce inférieure (22) et formée de façon à pouvoir s'introduire dans l'ouverture inférieure (18) correspondante du tube (10), si bien que le fluide sortant du passage de traversée (30) est conduit dans le tube intérieur (36), et que le diamètre du tube intérieur (36) est défini de façon à ce qu'entre la surface extérieure du tube intérieur (36) et la surface intérieure de l'enveloppe de tube (34), un espace creux (52) se crée à travers lequel le fluide apte à couler est conduit de la pièce supérieure (24) dans le tube (10), et un débitmètre (26) et un dispositif de mesure de température (28) étant disposés dans ou le long du chemin d'écoulement du fluide apte à couler, formé dans le dispositif.

2. Dispositif selon la revendication 1,
**caractérisé en ce que**
le débitmètre (26) est disposé à l'intérieur du tube intérieur (36) et le dispositif de mesure de température (28) dans l'espace creux (52).

3. Dispositif selon la revendication 1 ou 2,
**caractérisé en ce que**
le débitmètre (26) comprend un corps de flottage (40) disposé de manière mobile dans le tube intérieur (36).

4. Dispositif selon la revendication 3,
**caractérisé en ce que**
un ressort de pression (42) s'applique au corps de flottage (40), exerçant une force de ressort contre la direction d'écoulement du fluide.

5. Dispositif selon la revendication 3 ou 4,
**caractérisé en ce que**
le corps de flottage (40) est relié à une aiguille (48) d'un dispositif d'affichage (32) pour afficher le débit mesuré.

6. Dispositif selon l'une des revendications précédentes,
**caractérisé en ce que**
le dispositif de mesure de température (28) comprend un thermomètre (78) comportant un tube de thermomètre (54) et des dispositifs de réception et de fixation (58) correspondants pour la fixation du thermomètre (78) dans l'espace creux (52).

7. Dispositif selon la revendication 6,
**caractérisé en ce que**
le dispositif d'affichage (32) présente un indicateur de mémorisation (56) pour marquer la valeur de température acquise par le dispositif de mesure de température (28).

8. Dispositif selon l'une des revendications précédentes,
**caractérisé en ce que**
à l'extrémité de la pièce supérieure (24) détournée du tube (10), une poignée tournante (62) est formée qui actionne une broche (60) qui de son tour pénètre dans le tube intérieur (36) et est reliée à lui de manière étanche, si bien que lors de l'actionnement de la poignée tournante (62) la tête de soupape (38) se lève et s'abaisse.
